# DEMANDE DE BREVET EUROPEEN

(11) **EP 0 948 886 A1**
(43) Date de publication de la demande: **13.10.1999**
(21) Numéro de dépôt: 98400881.3
(22) Date de dépôt: 09.04.1998
(51) Int. Cl.: A01G 9/10, A01C 11/02

(54) **Procédé de transfert de plants en mottes, et tête de préhension pour la mise en oeuvre de ce procédé**

(71) Demandeur: GERPLANT AUTOMATION, F-76410 Cléon (FR)
(72) Inventeur: Germaine, Michel, 76350 Oissel (FR)
(74) Mandataire: Casalonga, Axel

(57) **Abrégé**

Procédé et tête de préhension pour le transfert de plants en mottes, plusieurs éléments de préhension 1 à 12 étant enfoncés dans et/ou retirés de la motte 14 en au moins deux phases successives intéressant chacune une partie seulement des éléments de préhension.

Application : à l'horticulture.

## Description

La présente invention se rapporte à un procédé de transfert de plants en mottes, consistant à saisir une motte à un emplacement de préhension en enfonçant les éléments de préhension d'un ensemble de plusieurs éléments de préhension depuis le haut dans une motte contenue dans un alvéole, autour du plant se trouvant dans la motte, à retirer de l'alvéole la motte suspendue aux éléments de préhension, et à relâcher la motte à un emplacement de réception en retirant les éléments de préhension de la motte. L'invention se rapporte également à une tête de préhension pour la mise en oeuvre de ce procédé, comprenant plusieurs éléments de préhension, des moyens de manoeuvre pour déplacer les éléments de préhension en va-et-vient par rapport à la tête de préhension, et des moyens de commande desdits moyens d'actionnement.

Par la demande WO 86/01975, on connaît un dispositif de préhension et de transfert de plants en mottes comprenant un support déplaçable entre une position de préhension d'une motte et une position de rempotage ou plantation de la motte, deux éléments de préhension de forme allongée montés l'un à distance et en regard de l'autre de façon déplaçable sur ledit support, leurs extrémités libres étant tournées vers le bas, des moyens de manoeuvre agissant sur les autres extrémités des éléments de préhension pour déplacer ces derniers, par rapport au support, conjointement en va-et-vient vers le bas et vers le haut entre une position haute inactive et une position basse active de préhension, ainsi que des moyens pour le guidage des éléments de préhension sur le support de manière qu'en position basse, les extrémités libres des éléments de préhension soient plus proches l'une de l'autre qu'en position haute. Dans ce dispositif connu, les éléments de préhension sont constitués de préférence par deux aiguilles convergeant vers le bas, qui sont enfoncées vers le bas dans une motte suivant leurs axes convergents pour saisir la motte, le support se trouvant en position de préhension. Le support avec les aiguilles et la motte suspendue aux aiguilles est ensuite amené en position de rempotage ou de plantation et les aiguilles sont retirées vers le haut suivant leurs axes pour libérer la motte.

Par le document FR-A-2 614 499, il est connu de saisir des objets fragiles tels que des plants en mottes, en vue de la transplantation en horticulture, à l'aide d'une pince comprenant des éléments de préhension en forme de lames opposées qui peuvent être écartées et rapprochées l'une de l'autre à l'aide d'un moyen de manoeuvre tel qu'un vérin pneumatique monté sur un support. Le mouvement de rapprochement et d'écartement des lames fait intervenir des moyens de guidage qui sont solidaires du support du vérin, et nécessite une conformation particulière des lames pour leur permettre de coopérer avec ces moyens de guidage en vue d'obtenir un mouvement de rapprochement et d'écartement dans le sens horizontal des extrémités libres des lames en réponse au mouvement vertical du vérin de manoeuvre.

Une autre pince de préhension révélée par le document FR-A-2 685 852, destinée également plus particulièrement à la transplantation de plants en mottes comprend des éléments de préhension opposés en forme de lames élastiques fixées à un support de telle manière que leurs extrémités libres puissent être écartées l'une de l'autre, à l'encontre de l'élasticité des lames, par un organe d'écartement mobile entre les lames, et que les extrémités libres puissent être rapprochées l'une de l'autre par la seule élasticité des lames, lors du mouvement de retrait de l'organe d'écartement.

Ces dispositifs connus, bien que très efficaces, ne donnent pas toujours entière satisfaction, notamment pour la préhension et le transfert de plants se trouvant dans des mottes qui sont très friables du fait de leur faible compacité et/ou du fait d'un faible enracinement du plant dans la motte.

On connaît par ailleurs par le document EP-A-0 657 094, un procédé et un appareil de transplantation de plants en mottes utilisant une tête de préhension comprenant plusieurs aiguilles, de préférence au nombre de quatre. Pour saisir un plant en motte, il est proposé par ce document d'enfoncer les aiguilles depuis le haut dans la motte contenant le plant se trouvant un alvéole, puis de déplacer les aiguilles vers le haut avec la motte, en maintenant les aiguilles toujours dans des positions parallèles les uns aux autres, en l'occurrence des positions verticales. De la même manière, pour relâcher le plant en motte, il est proposé, après avoir amené le plant en motte suspendu aux aiguilles à un emplacement de réception, de retirer les aiguilles verticalement de la motte. Du fait de leurs positions parallèles verticales et de l'absence de pincement exercé sur la motte, la rétention de la motte sur les aiguilles enfoncées dans cette dernière est faible, voire aléatoire, notamment dans le cas de mottes friables ou peu compactées. C'est d'ailleurs la raison pour laquelle il est prévu, suivant ce document, soit d'exercer depuis le bas une poussée sur la motte, à l'aide d'un poussoir, pendant le déplacement vers le haut des aiguilles, en synchronisme avec ce mouvement, soit de rapprocher les extrémités libres des aiguilles après leur enfoncement dans la motte, pour exercer un effet de pincement sur la motte. De plus, pour que les aiguilles puissent être retirées de la motte à l'emplacement de réception, il est nécessaire d'associer aux aiguilles des moyens de retenue de la motte qui maintiennent la motte abaissée à l'emplacement de réception pendant le retrait des aiguilles de la motte.

D'autres pinces révélées par exemple par les documents FR-A-2 635 637 et EP-A-0 327 674 sont destinées à la préhension de plants en mottes à l'aide de plusieurs éléments de préhension qui ne sont pas enfoncés dans la motte, mais saisissent cette dernière extérieurement après qu'elle ait été dégagée de son alvéole.

Il apparaît donc qu'aucun des procédés et dispositifs connus de préhension de plants en mottes ne donne pas entière satisfaction, notamment lorsque les plants se trouvent dans des mottes friables, peu compactées, qui risquent d'être détériorées, voire détruites lorsqu'elles sont saisies à l'aide des dispositifs connus.

La présente invention vise un procédé de transfert de plants en mottes qui remédie aux inconvénients que présentent les procédés connus, notamment lors du transfert de plants dans des mottes friables, peu compactées. L'invention vise également une tête de préhension pour le transfert de plants en mottes, cette tête étant capable de saisir, transférer et relâcher sans problèmes même des mottes friables compactées, tout en étant de structure simple et compacte.

Le procédé conforme à l'invention de transfert d plants en mottes consiste à saisir une motte à un emplacement de préhension en enfonçant les éléments de préhension d'un ensemble de plusieurs éléments de préhension depuis le haut dans la motte contenue dans un alvéole, autour du plant se trouvant dans cette motte, à retirer de l'alvéole la motte suspendue aux éléments de préhension, et à relâcher la motte à un emplacement de réception en retirant les éléments de préhension de la motte. Selon l'invention, on effectue l'enfoncement et/ou le retrait des éléments de préhension dans et/ou de la mote en au moins deux phases successives intéressant chacune une partie seulement des éléments de préhension.

Cet enfoncement et/ou retrait en au moins deux phases présente l'avantage qu'il est possible d'utiliser un nombre relativement élevé d'éléments de préhension dont l'enfoncement simultané dans une motte risquerait de provoquer une détérioration de cette dernière, alors que l'enfoncement en au moins deux phases successives intéressant chacune une partie seulement des éléments de préhension laisse la motte intacte. Compte tenu du nombre relativement élevé des éléments de préhension, ces derniers peuvent être très fins, ce qui réduit d'autant le risque d'endommagement de la motte par l'enfoncement de chaque élément de préhension dans la motte. De plus, du fait du grand nombre d'éléments de préhension, la motte est pour ainsi dire prise dans un "panier" ou une "cage" d'éléments de préhension qui retient intégralement la motte, même si cette dernière est très friable.

Par ailleurs grâce au retrait des éléments de préhension de la motte en au moins deux phases successives, il est possible, dans la plupart des cas, de se dispenser de l'utilisation de tous moyens de retenue de la motte à l'emplacement de réception, pendant le retrait des éléments de préhension, ces derniers ne risquant pas d'entraîner la motte pendant leur mouvement de retrait vers le haut. En effet, au moment du retrait de la première partie des éléments de préhension, les éléments de préhension restants se trouvent encore dans la motte et exercent donc sur cette dernière un effet de retenue qui, en combinaison avec le poids de la motte, est supérieur à l'effet d'entraînement vers le haut qu'exercent sur la motte les premiers éléments de préhension au moment de leur retrait vers le haut.

De préférence, on effectue l'enfoncement et/ou le retrait des éléments de préhension en au moins trois phases successives intéressant de préférence chacune moins de la moitié des éléments de préhension.

Cette manière de procéder élimine pratiquement toute nécessité d'utilisation de moyens de retenue de la motte à l'emplacement de réception, au moment du retrait des éléments de préhension.

La tête de préhension conforme à l'invention pour le transfert de plants en mottes comprend plusieurs éléments de préhension, des moyens de manoeuvre pour déplacer les éléments de préhension en va-et-vient par rapport à la tête, et des moyens de commande desdits moyens de manoeuvre. Selon l'invention, la tête de préhension comprend au moins deux moyens de manoeuvre agissant chacun sur une partie des éléments de préhension, et des moyens de commande pour agir en au moins deux phases successives sur les moyens de manoeuvre, dans un sens et/ou dans l'autre.

De préférence, la tête de préhension comprend au moins trois moyens de manoeuvre agissant chacun sur moins de la moitié des éléments de préhension, et des moyens de commande pour agir en au moins trois phases successives sur lesdits moyens de manoeuvre.

Dans le cadre de l'invention, les éléments de préhension de la tête de préhension conforme à l'invention peuvent être des aiguilles ou des lames, soit convergentes, comme cela est connu en soi par le document WO 86/01975, soit parallèles. Dans ce dernier cas, le grand nombre des éléments de préhension fait que ces derniers, même s'ils peuvent être avantageusement très fins pour endommager le moins possible la motte, exercent un effet d'entraînement suffisant sur cette dernière, lors de leur mouvement vers le haut, pour retirer la motte avec certitude de son alvéole, et qu'ils "enveloppent" la motte à la manière "panier" ou d'une "cage" pendant son transfert.

Dans le cadre de l'invention, les éléments de préhension peuvent être répartis sur tout le périmètre de la motte, qui peut être par exemple circulaire ou carré.

Il est cependant possible également, pour permettre à la tête de préhension d'approcher une motte portant un plant non pas par un mouvement vertical de descente, mais par un mouvement horizontal, soit de la tête par rapport à l'alvéole, soit de l'alvéole par rapport à la tête, de répartir les éléments de préhension de la tête sur une partie seulement du périmètre d'une motte, de préférence sur au moins deux tiers du périmètre dans le cas d'un périmètre circulaire ou sur un quart du périmètre dans le cas d'un périmètre carré, la partie restante du périmètre étant dépourvue d'éléments de préhension.

En se référant aux dessins schématiques annexés, on va décrire ci-après plus en détail un exemple de réalisation illustratif et non limitatif d'une tête de préhension conforme à l'invention ainsi que du procédé de transfert à l'aide d'une telle tête de préhension; sur les dessins :
la figure 1 est une vue en élévation d'une tête de préhension au-dessus d'un plant se trouvant dans une motte contenue dans un alvéole, la motte étant représentée en coupe;
la figure 2 est une coupe suivant II-II de la figure 1;
les figures 3 à 12 représentent les différentes étapes du transfert d'un plan en motte depuis un emplacement de préhension jusqu'à un emplacement de réception.

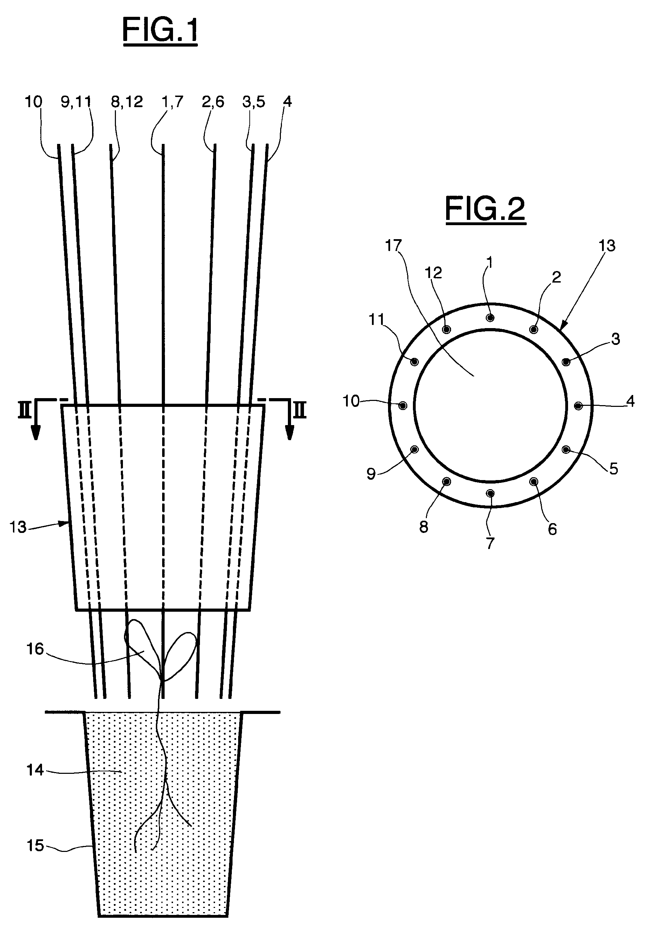

La tête de préhension telle qu'illustrée par les figures 1 et 2 comprend un ensemble de douze aiguilles 1 à 12 montées coulissantes dans un guide 13 qui comporte douze trous de passage répartis uniformément sur le pourtour du guide 13 de manière que les axes des trous soient situés sur un tronc de cône. Le guide 13 est monté sur un support non représenté, mobile verticalement, faisant partie d'une tête de préhension et de transfert, de telle manière que la petite base du tronc de cône soit tournée vers le bas. Ainsi, les aiguilles 1 à 12 montées coulissantes avec effet de guidage dans les trous du guide 13 convergent vers le bas.

Dans leur partie supérieure, les aiguilles 1 à 12 sont reliées à trois moyens de manoeuvre non représentés montés sur la tête de préhension et de transfert de manière à pouvoir communiquer aux aiguilles 1 à 12 un mouvement de va-et-vient suivant leurs axes par rapport au guide 13. Il peut s'agir, par exemple, de trois vérins pneumatiques, ou de tout autre agencement assumant les mêmes fonctions.

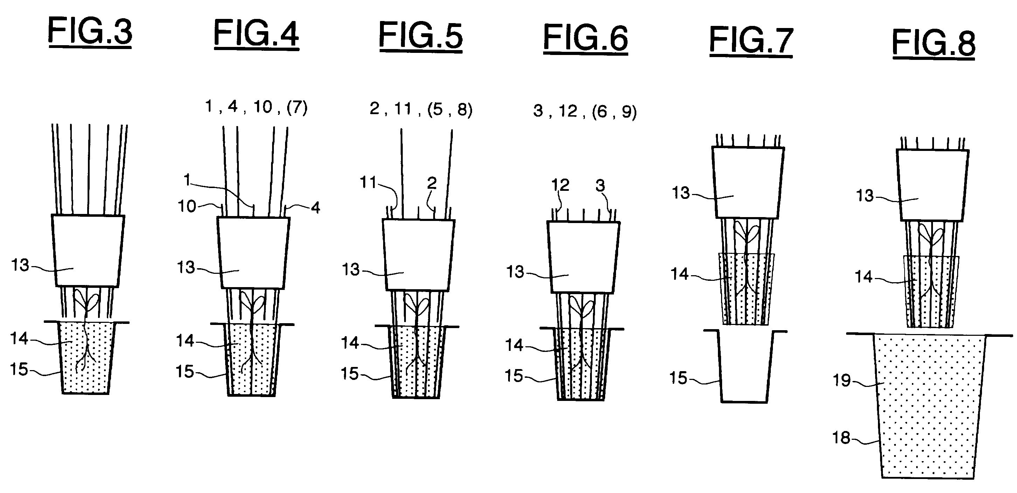

Dans l'exemple représenté, comme cela apparaîtra sur les figures 3 à 12, les aiguilles 1 à 12 sont reliées par groupes de quatre aux trois moyens de manoeuvre, à savoir que les aiguilles 1, 4, 7 et 10 sont reliées à un premier moyen de manoeuvre, les aiguilles 2, 5, 8 et 11 à un deuxième moyen de manoeuvre et les aiguilles 3, 6, 9 et 12 à un troisième moyen de manoeuvre. Les trois moyens de manoeuvre peuvent être commandés successivement, de manière que ces trois moyens puissent déplacer les aiguilles 1 à 12 suivant leurs axes en trois phases successives dans un sens et dans l'autre, c'est-à-dire leur imprimer un mouvement de descente par rapport au guide 13, pour les enfoncer dans une motte 14 contenue dans un alvéole 15, autour d'un plant 16 se trouvant dans la motte 14, en vue de la préhension de la motte, et d'un mouvement de montée par rapport au guide 13, pour les retirer de la motte 14, en vue du relâchement de cette dernière à un emplacement de réception.

Le guide 13 comporte, en son centre un trou de passage 17 cylindrique.

En se référant aux figures 3 à 12, on va décrire ci-après plus en détail les différentes étapes d'une opération consistant à saisir un plant en motte à un emplacement de réception, à le transférer à un emplacement de réception et à le relâcher à cet emplacement.

Il y a lieu de remarquer que sur les figures 3 à 12, on n'a représenté que les aiguilles 1, 2, 3, 4, 10, 11 et 12, pour plus de clarté. Toutefois, dans la mesure où les aiguilles 5 et 7 sont manoeuvrées par les mêmes moyens que les aiguilles 2 et 11, que les aiguilles 6 et 9 sont manoeuvrées par les mêmes moyens que les aiguilles 3 et 12 et que l'aiguille 7 est manoeuvrée par les mêmes moyens que les aiguilles 1, 4 et 10, tout mouvement imprimé à l'une des aiguilles intéresse également les aiguilles qui comportent le même moyen de manoeuvre. C'est la raison pour laquelle, sur les figures 3 à 12, les numéros des aiguilles manoeuvrées non représentées sont indiqués entre parenthèses derrière les numéros des aiguilles manoeuvrées visibles sur ces figures.

Dans la situation représentée sur la figure 3 qui correspond à celle de la figure 1, la tête de préhension a été amenée par un mouvement de descente vertical au-dessus de la motte 14 contenue dans l'alvéole 15, toutes les aiguilles étant relevées par rapport au guide 13 de manière que les extrémités inférieures des aiguilles dépassent le guide 13 d'une longueur correspondant approximativement à la hauteur du plant 16 contenu dans la motte 14.

Selon la figure 4, les aiguilles reliées à un premier des moyens de manoeuvre, à savoir les aiguilles 1, 4, 7 et 10 sont abaissées par rapport au guide 13, étant ainsi enfoncées dans la motte 14.

Selon la figure 5, quatre autres aiguilles reliées au deuxième moyen de manoeuvre, à savoir les aiguilles 2, 5, 8 et 11 sont abaissées également, c'est-à-dire enfoncées dans la motte 14.

Selon la figure 6, les quatre aiguilles restantes reliées au troisième moyen de manoeuvre, à savoir les aiguilles 3, 6, 9 et 12 sont également abaissées, donc enfoncées dans la motte 14.

Selon la figure 7, la tête de préhension est soulevée par rapport à l'alvéole 15, ce qui fait que les aiguilles 1 à 12 toutes enfoncées dans la motte 14 retirent de l'alvéole 15 la motte 14 suspendue à elles.

Selon la figure 8, l'ensemble de la tête de préhension, avec la motte 14 toujours suspendu aux aiguilles 1 à 12 enfoncées dans cette dernière, est amenée à un emplacement de réception au-dessus d'un alvéole 18 qui, dans l'exemple représenté, est plus grand que l'alvéole 15 et renferme un milieu de culture 19, par exemple du terreau.

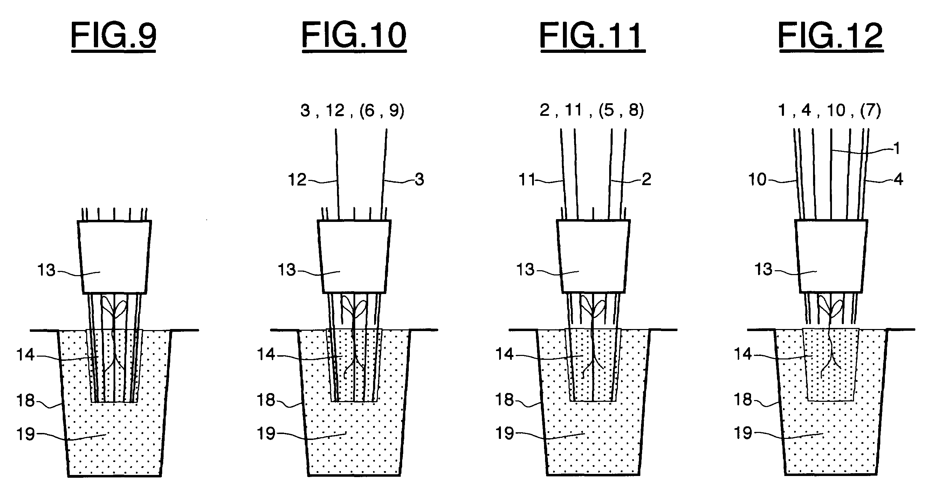

Selon la figure 9, la tête de préhension est ensuite abaissée de manière que la motte 14 toujours suspendue aux aiguilles soit enfoncée dans le milieu 19 contenu dans l'alvéole 18.

Selon la figure 10, quatre premières aiguilles, en l'occurrence les aiguilles 3, 6, 9 et 12 reliées au troisième moyen de manoeuvre, sont soulevées par rapport au guide 13 et sont ainsi retirées de la motte 14. Cette dernière n'a pas tendance à suivre le mouvement de montée des quatre aiguilles 3, 6, 9 et 12, étant maintenue abaissée par les huit aiguilles restantes.

Selon la figure 11, quatre aiguilles supplémentaires, en l'occurrence les aiguilles 2, 5, 8 et 11 reliées au deuxième moyen de manoeuvre sont retirées vers le haut de la motte 14 toujours maintenue abaissée par les quatre aiguilles restantes.

Enfin, selon la figure 12, les quatre aiguilles restantes 1, 4, 7, 10 reliées au premier moyen de manoeuvre sont également retirées de la motte 14 qui se trouve ainsi entièrement libérée par la tête de préhension, laquelle peut être ramenée de la position de réception à la position de préhension suivant la figure 3, au-dessus d'une autre motte à transférer.

Il y a lieu de noter que le mode de réalisation représenté et décrit n'a été donné qu'à titre d'exemple illustratif et non limitatif et que de nombreuses et variantes sont possibles dans le cadre de l'invention.

Ainsi, les aiguilles qui peuvent être remplacées également par des éléments de préhension d'autres formes, par exemple des lames, au lieu d'être convergentes, pourraient également être parallèles. Le nombre des éléments de préhension n'est pas limité à 12, comme dans l'exemple représenté, mais pourrait être inférieur ou supérieur à 12. De même, le nombre des phases d'enfoncement et de retrait des éléments de préhension pourrait être différent de trois, mais en tout cas égal à au moins deux. Dans le cas d'alvéoles ayant une forme différente de la forme circulaire, par exemple une forme carrée, les éléments de préhension, au lieu d'être disposés sur un cercle, comme illustré par la figue 2, pourraient également être disposés suivant un carré.

Au lieu d'être répartis sur un périmètre fermé (qu'il soit circulaire ou par exemple carré), les éléments de préhension pourraient également être répartis sur une partie seulement d'un périmètre, par exemple sur environ deux tiers d'un périmètre circulaire, la partie restante du périmètre étant dépourvue d'éléments de préhension. Cela permettrait à la tête de préhension d'approcher la motte à saisir, non pas par un mouvement de descente, mais par un mouvement horizontal, la partie du périmètre dépourvue d'éléments de préhension étant tournée dans le sens de déplacement de manière que la tête de préhension vienne se placer au-dessus de la motte sans que les aiguilles n'entrent en contact avec le plant. Dans le cas d'une motte ayant un périmètre carré, les éléments de préhension pourraient être disposés sur trois côtés seulement d'un carré.

Par ailleurs, les éléments de préhension reliés aux différents moyens de manoeuvre, au lieu d'être répartis uniformément, pourraient également être groupés, par exemple deux à deux.

Enfin, les phases successives d'enfoncement et/ou de retrait des éléments de préhension peuvent, dans le cadre de l'invention, se chevaucher partiellement, ce qui permet un enfoncement et/ou un retrait plus rapide(s).

## Revendications

1. Procédé de transfert de plants en mottes, consistant à saisir une motte à un emplacement de préhension en enfonçant les éléments de préhension d'un ensemble de plusieurs éléments de préhension depuis le haut dans la motte contenue dans un alvéole, autour du plant se trouvant dans cette motte, à retirer de l'alvéole la motte suspendue aux éléments de préhension, et à relâcher la motte à un emplacement de réception, en retirant les éléments de préhension de la motte, caractérisé par le fait qu'on effectue l'enfoncement et/ou le retrait des éléments de préhension dans et/ou de la motte en au moins deux phases successives intéressant chacune une partie seulement des éléments de préhension.

2. Procédé suivant la revendication 1, caractérisé par le fait qu'on effectue l'enfoncement et/ou le retrait des éléments de préhension en phases successives se chevauchant partiellement.

3. Tête de préhension pour le transfert de plans en mottes, comprenant plusieurs éléments de préhension, des moyens de manoeuvre pour déplacer les éléments de préhension en va-et-vient par rapport à la tête, et des moyens de commande des moyens de manoeuvre, caractérisée par le fait qu'elle comprend au moins deux moyens de manoeuvre agissant chacun sur une partie des éléments de préhension, et des moyens de commande pour agir, en au moins deux phases successives, sur les moyens de manoeuvre dans un sens et/ou dans l'autre.

4. Tête de préhension suivant la revendication 3, caractérisée par le fait que les moyens de manoeuvre et/ou les moyens de commande sont conçus de manière que les phases successives se chevauchent partiellement.

5. Tête de préhension suivant la revendication 3 ou 4, caractérisée par le fait que les éléments de préhension sont des aiguilles.

6. Tête de préhension suivant la revendication 3 ou 4, caractérisée par le fait que les éléments de préhension sont des lames.

7. Tête de préhension suivant la revendication 5 ou 6, caractérisée par le fait que les éléments de préhension convergent vers le bas.

8. Tête de préhension suivant la revendication 5 ou 6, caractérisée par le fait que les éléments de préhension sont parallèles.

9. Tête de préhension suivant l'une quelconque des revendications 3 à 8, caractérisée par le fait que les éléments de préhension sont réparties sur un périmètre fermé.

10. Tête de préhension suivant l'une quelconque des revendications 3 à 8, caractérisée par le fait que les éléments de préhension sont répartis sur une partie d'un périmètre fermé, la partie restante du périmètre étant dépourvue d'éléments de préhension.
